# EUROPEAN PATENT APPLICATION

(11) **EP 1 626 140 A2**
(43) Date of publication of application: **15.02.2006**
(21) Application number: 05017218.8
(22) Date of filing: 08.08.2005
(51) Int. Cl.: E04H 6/02

(54) **Shelter structure for motor vehicles**

(30) Priority: 09.08.2004 IT MI20040384 U
(71) Applicant: Extel S.r.l., 35129 Padova PD (IT)
(72) Inventor: Franceschini, Leopoldo, 35133 Padova (IT)
(74) Representative: Simino, Massimo

(57) **Abstract**

This invention relates to a shelter structure for automotive vehicles, motor vehicles and the like, which comprises a canopy (4) having a predetermined width and length to define a cover for a parking area and first support means (2) supporting said canopy (4). This structure is characterized in that it comprises a photovoltaic generator (5) for generating an electrical current when it is exposed to a light source, second support means (3) adapted to be connected to said first support means (2) and to support said photovoltaic generator (5) and in that said photovoltaic generator (5) is operatively associated to an electrical load, which is adapted to utilize said electrical current generated by said photovoltaic generator (5) when said photovoltaic generator (5) is exposed to said light source.

## Description

This invention relates to a shelter structure for automotive vehicles, motor vehicles or the like according to the preamble of claim 1.

It is known to use photovoltaic generators to receive solar rays and convert them into electrical energy to be supplied to an electrical load.

Usually, the photovoltaic generator is composed of a plurality of photovoltaic modules, which are in turn composed of a plurality of solar cells.

For instance, a photovoltaic module may comprise thirty-six solar cells, arranged in four parallel rows and connected in series, whereby a solar panel may be obtained by connecting multiple modules in series.

The photovoltaic panel is encapsulated between two high-strength glass layers, which are assembled with a sandwiched transparent silicone layer therebetween.

A so-called "string" is formed by connecting an array of panels in series, and multiple "strings", connected generally in parallel, form the photovoltaic generator.

Therefore, the basic element of the photovoltaic generator is the solar cell.

As is known, when the solar rays impinge upon the active surface of the solar cell, the photovoltaic generator generates an electrical current to be supplied to a power consuming system (or load), in the amount the photovoltaic generator is able to deliver.

Currently available solar cells have a performance of about 13-15%.

Such poor performance is mainly caused by the following reasons:
- the active surface of the solar cell is only sensitive to certain wavelengths of the solar spectrum;
- part of the solar energy incident on the solar cell is converted into heat;
- part of the incident radiation is reflected by the panel; and
- the electrical connections among the cells introduce a resistance which in turn dissipates energy.

The efficiency of the photovoltaic generator further depends on other factors, such as its exposure, i.e. the tilt angle with respect to solar radiation and to the azimuth throughout the different latitudes of the photovoltaic generator installation site.

This drawback is usually obviated by installing the panels with an average exposure, which causes the panel to have a varying efficiency during daylight hours.

Another problem to be usually solved is to locate installation areas or sites for photovoltaic generators which are far from trees or obstacles to solar radiation.

When the photovoltaic generator is required to have a peak power of, for instance, 20 KW, the installation area must have a surface of 200 to 300 m² exposed to solar radiation.

This problem is solved in prior art by installing the photovoltaic generator on building roofs or walls.

Nevertheless, the covering of buildings with photovoltaic generators shall account for architectural variants of buildings.

Thus, each building on which a photovoltaic generator is to be installed must be submitted to specific evaluation procedures to allow installation of such a photovoltaic generator.

This involves a longer time for the covering to be completed and higher costs for the user/customer.

The object of this invention is to provide a structure that can collect, convey and produce electrical energy from solar radiation or other light sources, which can solve the above mentioned prior art problems.

This object is fulfilled by a shelter structure for automotive vehicles, motor vehicles and the like, which can produce electrical energy from solar radiation or other light sources according with the features of claim 1.

Thanks to this invention a structure may be provided with a wide exposure surface and with low maintenance and installation cost requirements.

Furthermore, the inventive shelter structure may be installed in any parking lot, such as in ground level car parks, camping resorts, shopping malls, schools, markets and recycling stations.

Finally, since the parking lot is designed with reference to predetermined measurements, the dimensions of the inventive shelter structure may be defined in a modular and standardized manner.

This allows to considerably reduce manufacturing and installation costs, and simplifies maintenance procedures.

Further characteristics and advantages of the inventive shelter structure will be apparent from the following description of one preferred embodiment thereof, which is given by way of illustration and without limitation with reference to the accompanying figures, in which:

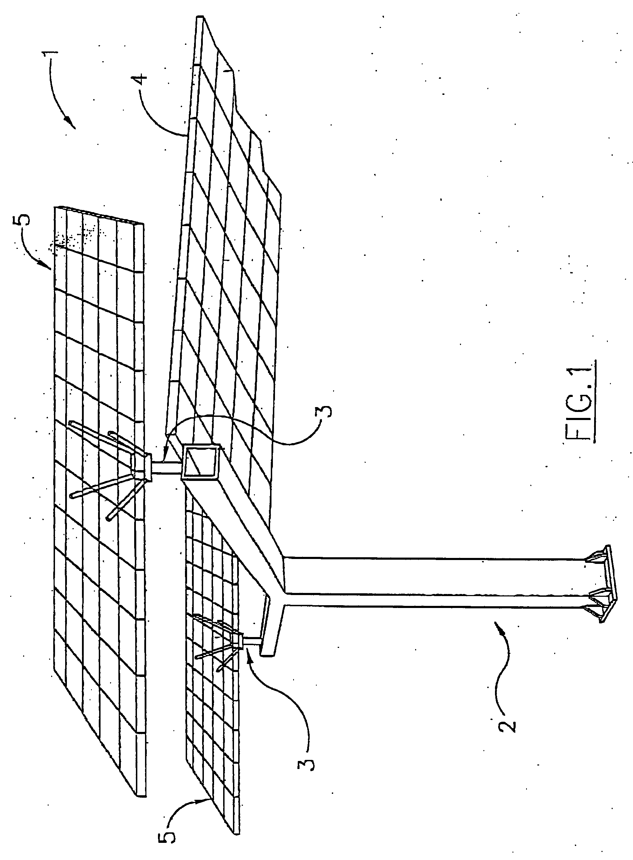

- Figure 1 is a perspective view of the structure according to the present invention;
- Figure 2 is a perspective view of a detail of Figure 1;
- Figure 3 is a perspective view of another detail of Figure 1;
- Figure 4 shows a particular use of the invention of Figure 1.

Referring to the accompanying figures, numeral 1 generally denotes a structure for automotive vehicles, motor vehicles and the like, according to the present invention.

The structure 1 includes first support means 2, for supporting a canopy 4 and second support means 3, which are associated to said first support means 2 and are adapted to support a photovoltaic generator 5.

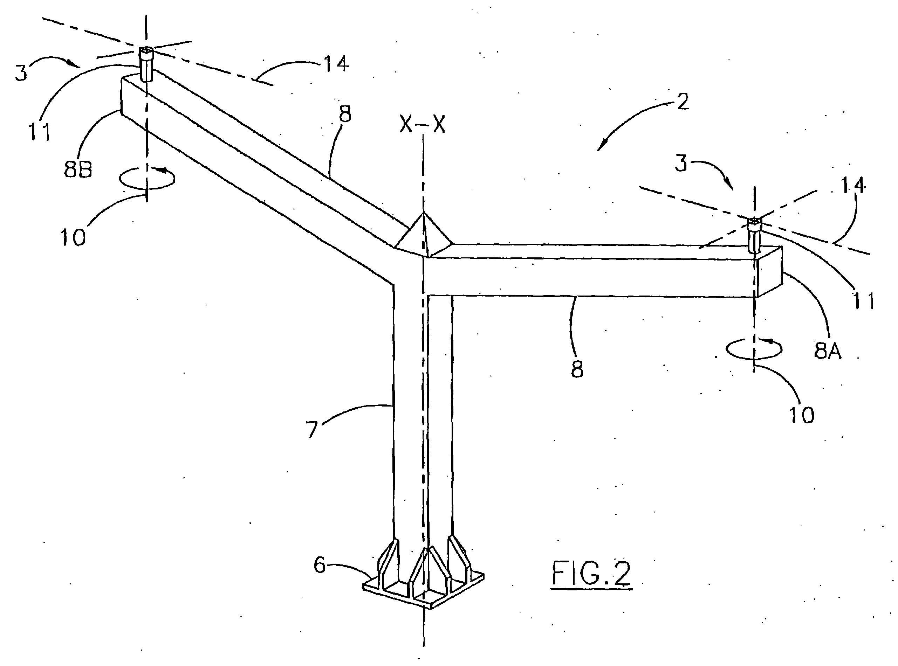

In a preferred embodiment (see Figure 2), the first support means 2 include a base 6 and an upper cross member 8 which are integrally interconnected by a post 7, extending along a substantially vertical axis X-X.

The canopy 4 is supported by the cross member 8 with arrangements well known to those skilled in the art and will not be described in detail herein.

The base 6 is fixed to the ground by an anchoring member, such as a plinth or any other functionally equivalent foundation system.

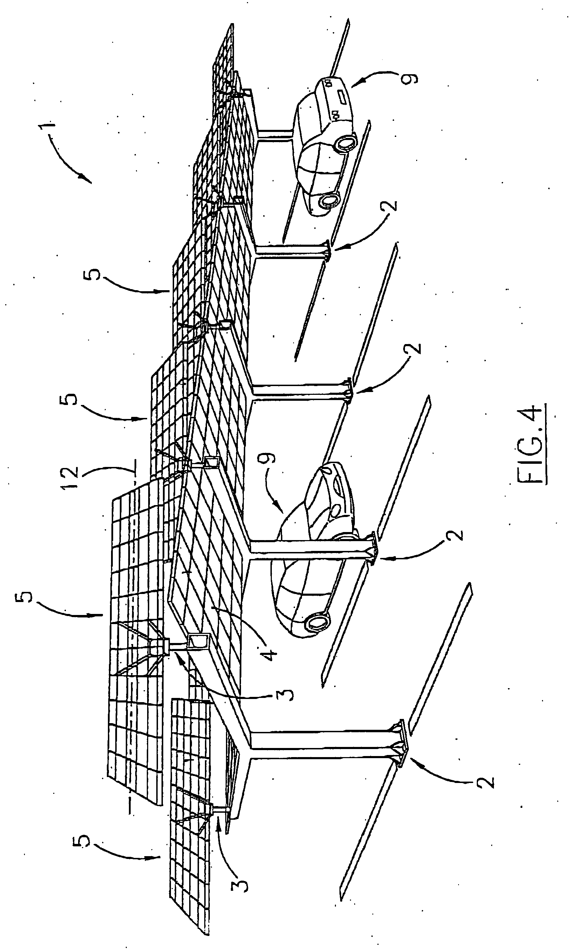

Particularly, the canopy 4 has a predetermined width and length, to define a cover for a parking area in which one or more vehicles 9 may be protected from weather, e.g. sun, UV rays, rain, hail and the like (see Figure 4).

In one embodiment, the second support means 3 (see Figure 2) include a pair of support members.

Particularly, these support members are coupled to the ends 8A and 8B of the cross member 8 in such a manner as to be able to pivot relative thereto about a vertical axis 10, which is substantially parallel to the axis X-X.

The pivotal motion of the second support means 3, i.e. the pair of support members, about the vertical axis 10, relative to the cross member 8, is actuated by an actuator device, known per se (and not shown), which comprises a first actuating motor.

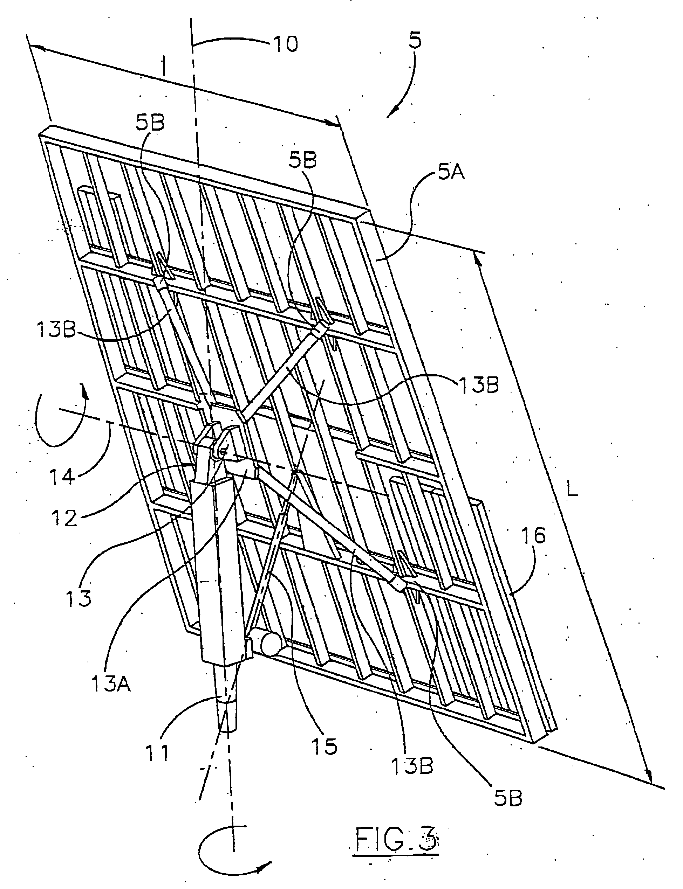

Particularly, in the illustrated example, the second support means 3 are provided (see Figure 3) in the form of a post 11 extending from said ends 8A and 8B of the cross member 8 to an upper end, whereto a head 12 is pivotally connected by connection means 13.

The photovoltaic generator 5 comprises a frame 5A for supporting a plurality of photovoltaic panels 16.

Particularly, the frame 5A is provided in the form of a substantially quadrangular body, having reinforcing members joined together by welding, to form a grid.

As shown in Figure 3, the head 12 is hinged to the frame 5A of the generator 5 by the connection means 13.

The head 12 further includes a plate-like member 13A as well as a plurality of supporting members 13B which are rigidly connected to said plate-like member 13A and define respective frame 5A supporting points.

It is worth noting that the pivotal connection of the plate-like member 13A occurs about an axis 14, so as to define a traverse motion of the photovoltaic generator 5.

The frame 5A of the photovoltaic generator 5 comprises latching means 5B, projecting from the surface opposite that on which said photovoltaic generators 16 are installed, which are adapted to be coupled to said supporting members 13B.

In the embodiment as shown in Figure 3, there are four supporting members 13B. These members 13B may be particularly made of metal, plastic or a light alloy.

Rotation (or "tilting") means 15 are further provided which allow the frame 5A of the photovoltaic generator 5 to rotate about the axis 14.

These tilting means 15, which allow the rotation of the generator 5, are provided in the form of a pneumatic piston or, alternatively, of an electromechanical linear actuator, actuated by a second motor (not shown).

A controller (not shown) is provided for orientation of the photovoltaic generator 5, which can control the first and the second motors to orient said photovoltaic generator 5 about the axes 10 and 14.

The rotation about the axes 10 and 14 is controlled by the controller so that the photovoltaic generator 5 always faces the sun to track seasonal variations of the ecliptic plane. In other words, this allows to adjust exposure, i.e. the tilting angle, with respect to solar rays and the azimuth throughout the different latitudes of the photovoltaic generator 5.

Alternatively, the controller shall adjust the exposure of the photovoltaic generator 5 during the hours of the day.

The controller can permanently store in a nonvolatile storage the day and time of installation of the photovoltaic generator 5, as well as the geographical coordinates of the structure 1 installation site.

This storage further includes information regarding the positions that the sun will take through the seasons in future years.

Therefore, the controller can adjust the exposure of the photovoltaic generator 5, i.e. its tilting angle relative to the ground and the azimuth, throughout the different latitudes, as a function of each site of installation of the structure 1.

The structure 1 further includes GSM/GRPS-based communication systems (not shown). These two-way communication systems can transmit and/or receive data from and to a remote control center.

An electrical connection is further provided between the controller and the communication systems to assure multiple functions, such as:
- monitoring the electrical energy production status and communicating it to those who want to be informed thereof, e.g. the remote control center;
- sending alarm signals in case of unauthorized attempts of removing elements of the structure 1.

The structure 1 finally includes multiple instruments and/or environmental sensors for detecting the weather conditions in which the photovoltaic generator 5 operates.

These instruments include, for instance, an anemometer and a barometer whereas the sensors include a temperature sensor and a humidity sensor.

These instruments are interfaced with the controller, in manners known to those skilled in the art, to assure protection of the structure 1.

Particularly, whenever weather conditions occur that cause damage to the structure of the photovoltaic generator 5, these sensors detect such bad weather conditions and indicate them to the controller. Depending on the values detected by the instruments and/or sensors, the controller operates the motors to restore the photovoltaic generator 5 to such a position as to reduce or prevent any damage thereto.

For example, the anemometer detects instant values of gusts, which are transmitted to the controller in real time. The controller compares the detected values with a threshold value. If the detected values are higher than this predetermined threshold, the controller operates the motors to move the photovoltaic generator 5 back to a safe position.

This is possible because the nonvolatile storage of the controller contains a set of reference values allowing a comparison thereof with real time values detected by the instruments and/or sensors.

Likewise, the controller operates the motors to move the photovoltaic generator 5 back to a safe position when climatic conditions are detected in which hailing is for instance anticipated.

In the specific embodiment as shown in Figure 3, the photovoltaic generator 5 is provided in the form of an element having an active surface of 18 m² when considering a generator having a shorter side "I" of about 3 m and a longer side "L" of about 6 m.

The structure 1 further includes means (not shown) for transmitting the electrical energy generated by the photovoltaic generator 5.

These transmitting means are provided, for instance, in the form of electric cables or optical fibers or waveguides.

The transmitting means allow the electrical energy generated by the photovoltaic generator 5 to be distributed to an electrical load.

In other words, the electrical load is operatively associated to said photovoltaic generator 5 in such a manner as to utilize the electrical current generated by the photovoltaic device when said photovoltaic generator 5 is exposed to the light source.

The electrical load may be any electrical device or power consuming system able to transport, use or store electricity, connected to a local power network or to the public power network. Otherwise, the electrical energy generated by the photovoltaic generator 5 may be sent to the public electric network according to the so-called grid-connected scheme.

It is worth noting that the photovoltaic generator 5 produces electrical energy in the form of DC voltage, therefore an inverter device has to be provided between the photovoltaic device and the public network, in the case of the "grid-connected" system, to convert energy into 230 V (single-phase) or 400 V (three-phase) alternating voltage.

The inverters for connection to the public network can assure that the electrical energy sent to said network meets the voltage and frequency specifications imposed by the distribution system.

For example, the electrical load may be a power consuming system, such as an electrical power consuming system of a private and/or public building near the structure 1.

Otherwise, the electrical load may be a battery for storing the electricity generated by the photovoltaic generator. The current thus produced during daytime may be stored in a storage battery. For instance, the battery may be connected to a lamp post, which may be used to light up the parking space during the nighttime.

In this case, a suitably sized diode shall be introduced in the electrical circuit to prevent battery discharge. When no light is available, the photovoltaic generator 5 becomes a passive element which absorbs energy instead of generating it.

Referring to Figure 4, it is apparent that if ten photovoltaic generators 5 are installed, an active surface of 180 m² is obtained.

The following advantages of the present invention may be thus appreciated:
- providing a shelter structure for automotive vehicles, motor vehicles and the like, which may be installed in any parking lot, such as in ground level car parks, camping resorts, shopping malls, schools, markets and recycling stations, and which can collect, convey and convert solar radiation into electrical energy;
- providing a parking lot on the basis of standard-coded measurements, so that the dimensions of the structure 1 may be defined in a modular and standardized manner, which allows to reduce manufacturing and installation costs and to simplify maintenance procedures.

Those skilled in the art will obviously appreciate that a number of changes and adaptations may be made to the preferred embodiment of the invention as described hereinbefore, and that its elements may be replaced by other functionally equivalent elements, without departure from the scope defined by the following claims.

## Claims

1. Shelter structure for automotive vehicles, motor vehicles and the like, comprising:
- a canopy (4) having a predetermined width and length to define a cover for a parking area; and
- first support means (2) for supporting said canopy (4),
**characterized in that** it comprises:
- a photovoltaic generator (5) for generating an electrical current when it is exposed to a light source;
- second support means (3) adapted to be connected to said first support means (2) and to support said photovoltaic generator (5);
- said photovoltaic generator (5) being adapted to be operatively associated to an electrical load, which is adapted to utilize said electrical current generated by said photovoltaic generator (5) when said photovoltaic generator (5) is exposed to said light source.

2. A shelter structure as claimed in claim 1, **characterized in that** said first support means (2) are fixed to the ground and comprise a base (6), a cross member (8) and a first post (7) extending along a predetermined axis (X-X) to connect said base (6) to said cross member (8).

3. A shelter structure as claimed in claims 1 and 2, **characterized in that** said second support means (3) are coupled to the ends (8A, 8B) of said cross member (8) in such a manner as to be able to pivot relative thereto about a vertical axis (10), which is substantially parallel to said predetermined axis (X-X).

4. A shelter structure as claimed in claim 3, **characterized in that** said second support means (3) include a second post (11) which extends from said cross member (8) to an end, whereto a head (12) is pivotally attached by connection means (13).

5. A shelter structure as claimed in claim 4, **characterized in that** said head (12) includes a plate-like member (13A) as well as a plurality of supporting members (13B) which are connected to said plate-like member (13A), said supporting members (13B) being adapted to define a plurality of supporting points for said photovoltaic generator (5).

6. A structure as claimed in any of claims 1 to 5, **characterized in that** said photovoltaic generator (5) includes a quadrangular frame (5A) which comprises grid-forming reinforcing members and has latching means (5B).

7. A shelter structure as claimed in claims 5 and 6, **characterized in that** said plurality of supporting members (13B) are coupled to said frame (5A) by said latching means (5B).

8. A shelter structure as claimed in any of claims 1 to 7, **characterized in that** it comprises a controller that is adapted to control rotation means (15), which are adapted to be coupled to said second support means (3) to maintain an optimized orientation of said photovoltaic generator (5) toward said light source.

9. A shelter structure as claimed in any preceding claim, **characterized in that** it comprises power transmitting means, for transferring the electrical current generated by said photovoltaic generator (5) to said electrical load, when the photovoltaic generator (5) is exposed to said light source.

10. A shelter structure as claimed in any preceding claim, **characterized in that** said electrical load is selected from the group consisting of a power consuming system connected to a power distributing network and a battery.

11. A shelter structure as claimed in claim 10, **characterized in that** said power network is a local power network or the public power distributing network.
